# EUROPEAN PATENT APPLICATION

(11) **EP 4 782 949 A2**
(43) Date of publication of application: **29.07.2026**
(21) Application number: 26185185.1
(22) Date of filing: 28.09.2020
(51) Int. Cl.: G05D 1/00

(54) **METHOD AND DEVICE FOR CONTROLLING TRAVEL OF AUTOMATED GUIDED VEHICLE**

(30) Priority: 29.09.2019 CN 201910935629
(62) Divisional of application: 20869540.3
(71) Applicant: Hangzhou Hikrobot Co., Ltd., Hangzhou, Zhejiang 310051 (CN)
(72) Inventor: MIAO, Songhua, Hangzhou, 310051 (CN)
(74) Representative: Epping - Hermann - Fischer

(57) **Abstract**

The embodiment of the present application provides a method and device for controlling the travel of an automated guided vehicle (AGV). The method comprises: when the AGV is traveling on a task path, for each road section on the task path, reading, via a scheduling device, a travel control parameter configured for the road section from an AGV route map(102); controlling, via the scheduling device, the AGV to travel on a corresponding road section according to the read travel control parameter (103), where the AGV route map is a route map within a travel range of the AGV, and each road section on the map is configured with a travel control parameter with respect to the road section. The present method allows the AGV to adapt to complex environments and increases the efficiency of the AGV in executing a task.

## Description

### Related Application

The present application is a divisional application of EP Patent Application No. 20869540.3, entitled "METHOD AND DEVICE FOR CONTROLLING TRAVEL OF AUTOMATED GUIDED VEHICLE", which is based on and claims priority to and benefit of Chinese Patent Application No. 201910935629.8 filed with the China National Intellectual Property Administration (CNIPA) on September 29, 2019.

### Technical Field

The present application relates to the technical field of AGV (Automated Guided Vehicle), and in particular, to a method and device for controlling the travel of automatic guided vehicle.

### Background

AGV (Automated Guided Vehicle) refers to a transport vehicle equipped with automatic guidance devices such as electromagnetic or optical automatic guidance devices, which can travel along a prescribed guidance path, and has safety protection and various transfer functions. It is a truck that does not require a driver in industrial applications, and uses a rechargeable battery as its power source.

AGV can be controlled by computer, electronic control equipment, laser reflector, etc. For example: when a certain part of the workshop needs auxiliary materials, the staff will input the relevant information of the request to add auxiliary materials to the computer terminal, and the computer terminal will then send the relevant information to the central control room, and professional technicians will edit the AGV instructions. With the cooperation of the control equipment, this instruction is finally received and executed by the AGV, and the auxiliary materials are sent to the corresponding location.

### SUMMARY

The embodiments of the present application propose an AGV travel control method and apparatus, so as to improve the adaptability of the AGV to complex environments.

The technical solutions of the embodiments of the present application are implemented as follows:
In the first aspect, an embodiment of the present application provides a method for controlling travel of an automatic guided vehicle AGV, the method comprising:
when the AGV is traveling on a task path, for each road section on the task path, reading, via a scheduling device, a travel control parameter configured for the road section from an AGV route map;
controlling, via the scheduling device, the AGV to travel on a corresponding road section according to the read travel control parameter;
wherein the AGV route map is a route map within a travel range of the AGV, and each road section on the map is configured with a travel control parameter for the road section.
In a possible embodiment, the travel control parameters include one or any combination of the following: a speed, an acceleration, a positioning accuracy configured with a positioning position and executing an action;
when the travel control parameter includes a speed, controlling the AGV to travel on a corresponding road section according to the travel control parameter includes:
when detecting that the AGV enters the corresponding road section, determining, via the scheduling device, whether a speed corresponding to the road section is consistent with a current speed of the AGV, and if not, then controlling the AGV to adjust its speed from the current speed to the speed corresponding to the road section;
when the travel control parameter includes an acceleration, controlling the AGV to travel on the corresponding road section according to the travel control parameter includes:
   when detecting that the AGV enters the corresponding road section, determining, via the scheduling device, whether an acceleration corresponding to the road section is consistent with a current acceleration of the AGV, and if not, then controlling the AGV to adjust its acceleration from the current acceleration to the acceleration corresponding to the road section;
   when the travel control parameter includes a positioning accuracy configured with a positioning position and executing an action, controlling the AGV to travel on the corresponding road section according to the travel control parameter includes:
      when detecting that the AGV enters the corresponding road section, detecting, via the scheduling device, a distance between the AGV and the positioning position in real time, and when the distance is less than the positioning accuracy, controlling the AGV to execute a corresponding action.

In a possible embodiment, after reading the travel control parameter configured for the road section from the AGV route map, the method further includes:
for each road section on the task path, querying, via the scheduling device, from the AGV route map whether the road section is configured with enabling flags for one or more functions, and if so, controlling the AGV to execute a corresponding function when traveling on the road section.
In a possible embodiment, the functions include: a voice playback function configured with voice content to be played, or/and, an obstacle avoidance detection function configured with an obstacle avoidance detection distance, or/and a start actuator function configured with a start position; and
when the function includes the voice playback function configured with the voice content to be played, controlling the AGV to execute a corresponding function when traveling on the road section includes:
   when detecting that the AGV enters the road section, controlling, via the scheduling device, the AGV to start playing the configured voice content, and when detecting that the AGV leaves the road section, controlling the AGV to stop playing the voice content;
   when the function includes an obstacle avoidance detection function configured with an obstacle avoidance detection distance, controlling the AGV to execute a corresponding function when traveling on the road section includes:
      when detecting that the AGV enters the road section, controlling, via the scheduling device, the AGV to start detecting obstacles within the configured obstacle avoidance detection distance, and when detecting that the AGV leaves the road section, controlling the AGV to stop detecting;
      when the functions include the start actuator function configured with a start position, controlling the AGV to execute a corresponding function when traveling on the road section includes:
         when detecting that the AGV enters the road section, detecting in real time, via the scheduling device, whether the AGV reaches the start position for starting the actuator, and if so, controlling the AGV to start the actuator.

In a possible embodiment, the scheduling device is located on the AGV,
when the AGV is traveling on a task path, for each road section on the task path, before reading, via a scheduling device, a travel control parameter configured for the road section from an AGV route map, the method further comprises:
receiving, via the scheduling device, a task path sent by a scheduling server;
wherein reading, via a scheduling device, a travel control parameter configured for the road section from an AGV route map for each road section on the task path, comprises:
   periodically reading, via the scheduling device, a travel control parameter configured for a road section where a current position of the AGV is located from the AGV route map according to the current position of the AGV;
   wherein controlling, via the scheduling device, on the basis of the read travel control parameter, the AGV to travel on a corresponding road section according to the travel control parameter, comprises:
      comparing, via the scheduling device, the read travel control parameter with a currently used travel control parameter, if they are inconsistent, updating the currently used travel control parameter with the read travel control parameter, then controlling the AGV to travel on the current road section according to the updated currently used travel control parameter.

In a possible embodiment, the scheduling device is located on the scheduling server,
when the AGV is traveling on a task path, for each road section on the task path, before reading, via a scheduling device, a travel control parameter configured for the road section from an AGV route map, the method further comprises:
receiving, via the scheduling device, a AGV task and planning a task path of the AGV task according to a pre-drawn AGV route map, and sending the task path to the AGV;
wherein reading, via a scheduling device, a travel control parameter configured for the road section from an AGV route map for each road section on the task path, comprises:
receiving, via the scheduling device, a current position of the AGV periodically sent by the AGV, and reading a travel control parameter configured for a road section where the current position of the AGV is located from the AGV route map according to the current position of the AGV, and sending the travel control parameter to the AGV.

In the second aspect, an embodiment of the present application provides an apparatus for controlling travel of an automated guided vehicle AGV, the apparatus comprises:
a travel control parameter reading module, configured for, when the AGV is traveling on a task path, for each road section on the task path, reading a travel control parameter configured for the road section from an AGV route map, wherein the AGV route map is a route map within a travel range of the AGV, and each road section on the map is configured with a travel control parameter for the road section;
a travel control module, configured for controlling the AGV to travel on a corresponding road section according to the travel control parameter read by the travel control parameter reading module.

In a possible embodiment, the travel control module is further configured for:
when the travel control parameter comprises a speed, controlling the AGV to travel on a corresponding road section according to the travel control parameter, comprises:
when detecting that the AGV enters the corresponding road section, determining whether a speed corresponding to the road section is consistent with a current speed of the AGV, and if not, then controlling the AGV to adjust its speed from the current speed to the speed corresponding to the road section;
when the travel control parameter comprises an acceleration, controlling the AGV to travel on the corresponding road section according to the travel control parameter, comprises:
   when detecting that the AGV enters the corresponding road section, determining whether an acceleration corresponding to the road section is consistent with a current acceleration of the AGV, if not, then controlling the AGV to adjust its acceleration from the current acceleration to the acceleration corresponding to the road section;
   when the travel control parameter comprises a positioning accuracy configured with a positioning position and executing an action, controlling the AGV to travel on the corresponding road section according to the travel control parameter comprises:
      when detecting that the AGV enters the corresponding road section, detecting a distance between the AGV and the positioning position in real time, and when the distance is less than the positioning accuracy, controlling the AGV to execute a corresponding action.

In a possible embodiment, wherein the travel control module is further configured for querying, for each road section on the task path, from the AGV route map whether the road section is configured with enabling flags for one or more functions, and if so, controlling the AGV to execute a corresponding function when traveling on the road section.

In a possible embodiment, wherein the functions configured for the road section queried by the travel control module comprise: a voice playback function configured with voice content to be played, or/and, an obstacle avoidance detection function configured with an obstacle avoidance detection distance, or/and, a start actuator function configured with a start position; and
when the functions comprise the voice playback function configured with voice content to be played, controlling the AGV to execute a corresponding function by the travel control module when traveling on the road section comprises:
when detecting that the AGV enters the road section, controlling the AGV to start playing the configured voice content, and when detecting that the AGV leaves the road section, controlling the AGV to stop playing the voice content;
when the functions comprise the obstacle avoidance detection function configured with an obstacle avoidance detection distance, controlling the AGV to execute a corresponding function by the travel control module when traveling on the road section comprises:
   when detecting that the AGV enters the road section, controlling the AGV to start detecting obstacles within the configured obstacle avoidance detection distance, and when detecting that the AGV leaves the road section, controlling the AGV to stop detecting;
   when the functions comprise the start actuator function configured with a start position, controlling the AGV to execute a corresponding function by the travel control module when traveling on the road section comprises:
      when detecting that the AGV enters the road section, detecting in real time whether the AGV reaches the start position for starting the actuator, and if so, controlling the AGV to start the actuator.

In a possible embodiment, wherein the apparatus is located on the AGV,
for each road section on the task path, before the travel control parameter reading module reading a travel control parameter configured for the road section from an AGV route map, further comprises:
receiving a task path sent by a scheduling server;
for each road section on the task path, the travel control parameter reading module reading a travel control parameter configured for the road section from an AGV route map, comprises:

periodically reading a travel control parameter configured for a road section where a current position of the AGV is located from the AGV route map according to the current position of the AGV;
the travel control module controlling the AGV to travel on the corresponding road section according to the travel control parameter read by the travel control parameter reading module, comprises:
   comparing the read travel control parameter with a currently used travel control parameter, if they are inconsistent, updating the currently used travel control parameter with the read travel control parameter, then controlling the AGV to travel on the current road section according to the updated currently used travel control parameter.

In a possible embodiment, the scheduling device is located on a scheduling server,
for each road section on the task path, before the travel control parameter reading module reading a travel control parameter configured for the road section from an AGV route map, further comprises:
receiving a AGV task and planning a task path of the AGV task according to a pre-drawn AGV route map, and sending the task path to the AGV;
for each road section on the task path, the travel control parameter reading module reading a travel control parameter configured for the road section from an AGV route map, comprises:
   receiving a current position of the AGV periodically sent by the AGV, and reading a travel control parameter configured for a road section where the current position of the AGV is located from the AGV route map according to the current position of the AGV, and sending the travel control parameter to the AGV.

In a third aspect, an embodiment of the present application provides an electronic device, including a processor and a memory;
the memory is configured for storing a computer program;
the processor is used to implement any of the AGV travel control methods described above when executing the program stored in the memory.

In a fourth aspect, an embodiment of the present application provides a computer-readable storage medium, wherein a computer program is stored in the computer-readable storage medium, and when the computer program is executed by a processor, the AGV travel control methods described above are implemented.

In a fifth aspect, the embodiments of the present application further provide a computer program product including instructions, which, when running on a computer, enables the computer to execute any of the AGV travel control methods described above.

The embodiment of the present application, takes into account the actual road conditions of different road sections on the AGV task path, configures travel control parameter for different road sections, and reads the travel control parameter of the road section in real time during the traveling process of the AGV, so that the AGV can adapt to complex environments, and improve the efficiency of the AGV to perform tasks.

### Brief Description of the Drawings

In order to explain the embodiments of the present application and the technical scheme of the prior art more clearly, the drawings used in the prior art and the embodiments will be described briefly in the following, and it is apparent that the drawings in the description below are only some embodiments of the present application and those skilled in the art can obtain other drawings according to these drawings without inventive efforts.
FIG. 1 is a flowchart of an AGV travel control method provided by an embodiment of the present application;
FIG. 2 is a flowchart of an AGV travel control method provided by another embodiment of the present application;
FIG. 3 is a flowchart of an AGV travel control method provided by yet another embodiment of the present application;
FIG. 4 is a flowchart of an AGV travel control method provided by yet another embodiment of the present application;
FIG. 5 is a schematic structural diagram of an AGV travel control apparatus provided by an embodiment of the present application.

### Detailed Description of the Invention

The technical solution in the embodiments of the present application will be clearly and completely described in conjunction with the drawings in the embodiments of the present application, obviously, the embodiments described are only part of the embodiments of the present application and not all of them. Based on the embodiments in the present application, all other embodiments obtained by those of ordinary skilled in the art on the basis of the present application fall under the protection of the present application.

In the related art, AGV is traveling on the path at the same speed, without considering the complexity of the driving environment, for example: the actual road conditions of different roads are different, some road conditions are good, and some road conditions are poor, if the speed is same, the travel efficiency will be low, and the task will not be completed at the optimal speed or quality. In addition, it is not considered that AGV may need to enable some specific functions when traveling on some roads, such as voice playback, and these related technologies are not considered.

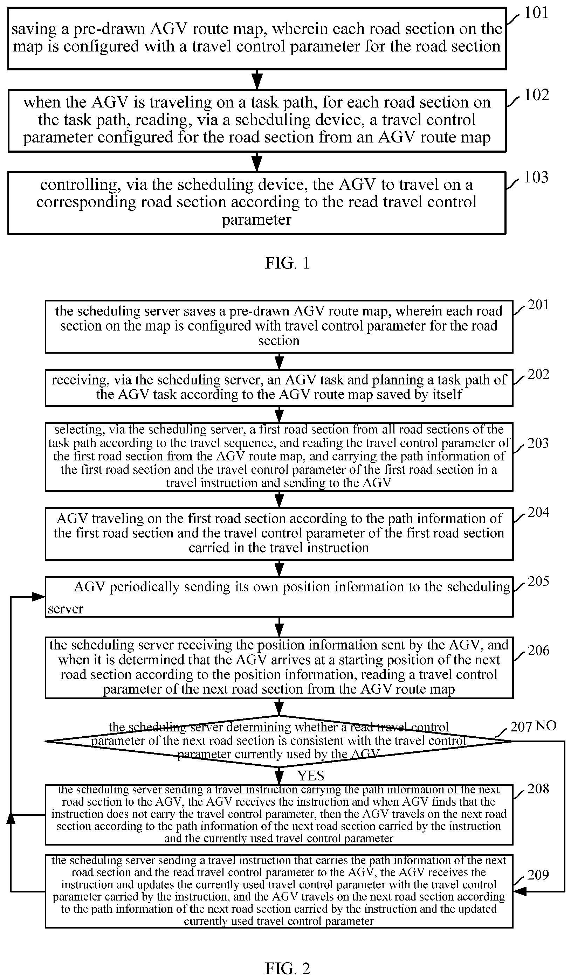

FIG. 1 is a flowchart of an AGV travel control method provided by an embodiment of the present application, and its specific steps are as follows:
Step 101: saving a pre-drawn AGV route map, wherein each road section on the map is configured with a travel control parameter for the road section.

The AGV route map is a route map for the entire travel range of the AGV. A road between two adjacent road section nodes on the map is called a road section. For any road section in the AGV route map, the travel control parameter for the road section can be configured.

The AGV route map can be stored in the database of the server section, and the scheduling device reads it from the database when it is used, or the AGV route map can be directly stored in the scheduling device, which are within the protection scope of the present application. The scheduling device is a device used to implement the AGV travel control method of the present application. The scheduling device uses hardware resources such as computing resources, communication resources, and storage resources to operate; the scheduling device can be on the server side or in the AGV, both of which are within the protection scope of the present application.

The travel control parameters include: one of the following or any combination thereof: a speed, an acceleration, a positioning accuracy configured with a positioning position and executing an action, where any combination refers to that at least two of the speed, acceleration, the positioning position configured with the positioning position, and positioning accuracy configured with a positioning position and executing an action are combined to obtain the travel control parameters. The speed includes: one of the maximum speed and the minimum speed or a combination thereof (i.e. the combination of the maximum speed and the minimum speed). The acceleration includes: one of the maximum acceleration and the minimum acceleration or a combination of thereof (i.e. the combination of the maximum acceleration and the minimum acceleration). For the positioning accuracy configured with a positioning position and executing an action, for example: when the AGV is to be docked with some stations, such as elevators, high positioning accuracy is required at this time.

Wherein the road refers to the geographical road within the travel range of the AGV, that is, the road divided according to the geographical division method.

Step 102: when the AGV is traveling on a task path, for each road section on the task path, reading, via a scheduling device, a travel control parameter configured for the road section from an AGV route map.

The task path includes at least one road/section, which is the section that the AGV needs to travel to perform the task. The travel control parameters of each road section can be customized according to the actual situation of the road section.

Step 103: controlling, via the scheduling device, the AGV to travel on a corresponding road section according to the read travel control parameter.

Optionally, when the travel control parameter includes a speed, controlling the AGV to travel on the corresponding road section according to the travel control parameter includes:
when detecting that the AGV enters one road section, determining whether a speed corresponding to the road section is consistent with a current speed of the AGV, and if not, controlling the AGV to adjust its speed from the current speed to the speed corresponding to the road section.
when the travel control parameter includes an acceleration, controlling the AGV to travel on the corresponding road section according to the travel control parameter includes:
   when detecting that the AGV enters the corresponding road section, determining whether a speed corresponding to the road section is consistent with a current speed of the AGV, and if not, then controlling the AGV to adjust its speed from the current speed to the speed corresponding to the road section;
   when the travel control parameter includes a positioning accuracy configured with a positioning position and executing an action, controlling the AGV to travel on the corresponding road section according to the travel control parameter includes:
      when detecting that the AGV enters the corresponding road section, detecting a distance between the AGV and the positioning position in real time, and when the distance is less than the positioning accuracy, controlling the AGV to execute a corresponding action.

Optionally, for each road section on the task path, querying from the AGV route map whether the road section is configured with enabling flags for one or more functions, and if so, controlling the AGV to execute a corresponding function when traveling on the road section.

In a possible embodiment of the present application, the functions include: a voice playback function configured with voice content to be played, or/and, an obstacle avoidance detection function configured with an obstacle avoidance detection distance, or/and a start actuator function configured with a start position; and
when the functions include the voice playback function configured with voice content to be played, controlling the AGV to execute a corresponding function when traveling on the road section includes:
when detecting that the AGV enters the road section, controlling the AGV to start playing the configured voice content, and when detecting that the AGV leaves the road section, controlling the AGV to stop playing the voice content;
when the functions include the obstacle avoidance detection function configured with an obstacle avoidance detection distance, controlling the AGV to execute a corresponding function when traveling on the road section includes:
   when detecting that the AGV enters the road section, controlling the AGV to start detecting obstacles within the configured obstacle avoidance detection distance, and when detecting that the AGV leaves the road section, controlling the AGV to stop detecting;
   when the functions include the start actuator function configured with a start position, controlling the AGV to execute a corresponding function when traveling on the road section includes:
      when detecting that the AGV enters the road section, detecting in real time whether the AGV reaches the start position for starting the actuator, and if so, controlling the AGV to start the actuator.

The above embodiment takes into account the actual road conditions of different road sections on the AGV task path, configures travel control parameters for different road sections respectively, and reads the travel control parameters of the road sections in real time during the AGV travel process, so that the AGV can adapt to complex environments, and improve the efficiency of AGV performing tasks.

For steps 101 to 103 in the above embodiment, all of them can be completed by a scheduling server, or all of them can be completed by the AGV, or some of the steps are completed by the scheduling server and some of the steps are completed by the AGV, sspecific embodiments are as follows:
FIG. 2 is a flowchart of an AGV travel control method provided by another embodiment of the present application, and its specific steps are as follows:
Step 201: the scheduling server saves a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring a travel control parameter, it can be configured on a corresponding road section or on a starting node of the road section.

In addition, for each road section on the AGV route map, if the AGV needs to perform one or more functions when traveling on the road section, the road section is configured with enabling flags of the one or more functions.

The functions include: a voice playback function configured with the voice content to be played, or/and an obstacle avoidance detection function configured with an obstacle avoidance scheme (including obstacle avoidance detection distance), or/and a start actuator function configured with a start position. For example, the start actuator configured with a start position can enable the AGV to start the robotic arm to grab the object ahead after reaching position A; for example, the start actuator configured with a start position can enable the AGV to turn on the flashing light after reaching position B.

Step 202: receiving, via the scheduling server, an AGV task and planning a task path of the AGV task according to the AGV route map saved by itself.

Step 203: selecting, via the scheduling server, a first road section from all road sections of the task path according to the travel sequence, and reading the travel control parameter of the first road section from the AGV route map, and carrying the path information of the first road section and the travel control parameter of the first road section in a travel instruction and sending to the AGV.

In addition, if the scheduling server reads one or more function enabling flags of the first road section from the AGV route map, the function enabling flags are send to the AGV by carried in the travel instruction.

Step 204: AGV traveling on the first road section according to the path information of the first road section and the travel control parameter of the first road section carried in the travel instruction.

In addition, in the case that one or more function enabling flags are carried in the travel instruction, the AGV needs to execute the corresponding function.

Step 205: AGV periodically sending its own position information to the scheduling server.

The AGV periodically sends its own position information to the scheduling server, so that the scheduling server can obtain the position of the AGV and issue the AGV travel instructions according to the position of the AGV.

Step 206: the scheduling server receiving the position information sent by the AGV, and when it is determined that the AGV arrives at a starting position of the next road section according to the position information, the scheduling server reading a travel control parameter of the next road section from the AGV route map.

In addition, if the next road section in the AGV route map is configured with one or more function enabling flags, the scheduling server will read them together.

Step 207: the scheduling server determining whether a read travel control parameter of the next road section is consistent with the travel control parameter currently used by the AGV, if so, go to step 208; otherwise, go to step 209.

The scheduling server can maintain a travel control parameter list for the AGV. When reading a travel control parameter of a road section from the AGV route map, the travel control parameter can be sequentially saved in the travel control parameter list. In this step, the scheduling server can read the travel control parameter currently used by the AGV from the travel control parameter list.

In addition, if the scheduling server reads one or more function enabling flags of the next road section from the AGV route map, the functions corresponding to the function enabling flags of the next road section are also compared with the functions currently being executed by the AGV. Specifically:
1) For any function corresponding to the function enabling flag of the next road section, if the function is the same as a function currently being executed by the AGV, it does not carry any flag of the function in the travel instruction, and after the AGV receives the instruction, it continues to execute the function on the next road section; otherwise, the enabling flag of the function is carried in the travel instruction, and after the AGV receives the instruction, it starts executing the function on the next road section;
2) For any function currently being executed by the AGV, if the function is different from each function corresponding to the function enabling flag of the next road section, the scheduling server will carry a disabling flag of the function in the travel instruction, and after the AGV receives this instruction, it stops executing the function on the next road section.

For example, if functions 1, 2, and 3 are executed in the current road section, and the function flags of the next road section correspond to functions 1 and 4, the travel instruction of the next road section carries the disabling flags of functions 2 and 3, and carries the enabling flag of function 4.

Step 208: the scheduling server sending a travel instruction carrying the path information of the next road section to the AGV, the AGV receives the instruction and when AGV finds that the instruction does not carry the travel control parameter, then the AGV travels on the next road section according to the path information of the next road section carried by the instruction and the currently used travel control parameter, and the process returns to step 205.

The path information is used to indicate the AGV's travel direction on the road section, such as: going straight, turning, etc.

Step 209: the scheduling server sending a travel instruction that carries the path information of the next road section and the read travel control parameter to the AGV, the AGV receives the instruction and updates the currently used travel control parameter with the travel control parameter carried by the instruction, and the AGV travels on the next road section according to the path information of the next road section carried by the instruction and the updated currently used travel control parameter, and the process returns to step 205.

When the scheduling server determines that the AGV has reached the end of the task according to the position information sent by the AGV, it can send a stop instruction to the AGV.

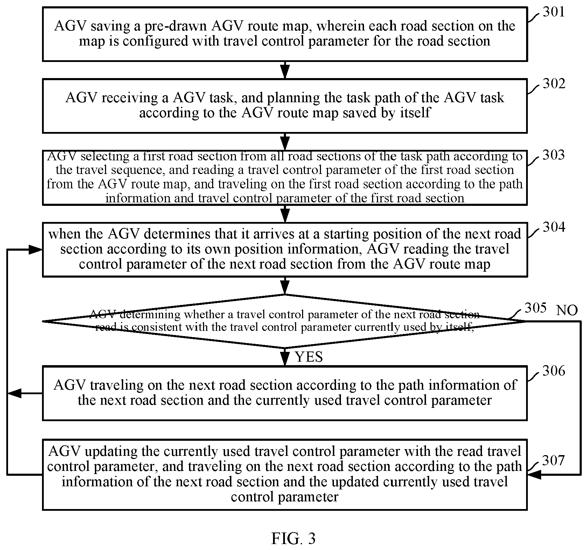

FIG. 3 is a flowchart of an AGV travel control method provided by another embodiment of the present application, and its specific steps are as follows:
Step 301: AGV saving a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring the travel control parameters, it can be configured on the corresponding road section or on the starting node of the road section.

In addition, for each road section on the AGV route map, if the AGV needs to perform one or more functions when traveling on the road section, the road section is configured with enabling flags of the one or more functions.

The functions include: a voice playback function configured with voice content to be played, or/and an obstacle avoidance detection function configured with an obstacle avoidance scheme (including obstacle avoidance detection distance), or/and a start actuator function configured with a start position.

Step 302: AGV receiving a AGV task, and planning the task path of the AGV task according to the AGV route map saved by itself.

The AGV task can be sent by the scheduling server.

Step 303: AGV selecting a first road section from all road sections of the task path according to the travel sequence, and reading a travel control parameter of the first road section from the AGV route map, and traveling on the first road section according to the path information and travel control parameter of the first road section.

In addition, if one or more function enabling flags of the first road section are read from the AGV route map, the corresponding function is executed on the first road section.

Step 304: when the AGV determines that it arrives at a starting position of the next road section according to its own position information, AGV reading the travel control parameter of the next road section from the AGV route map.

In addition, if one or more function enabling flags are configured on the next road section in the AGV route map, they will be read together.

Step 305: AGV determining whether a travel control parameter of the next road section read is consistent with the travel control parameter currently used by itself, if so, execute step 306; otherwise, execute step 307.

In addition, if the next road section is configured with one or more function enabling flags, the AGV also needs to compare the functions corresponding to the function enabling flags with the functions currently being executed, specifically:
1) for each function corresponding to each function enabling flag, if the function is the same as a function currently being executed, continue to execute the function on the next road section; otherwise, start to execute the function on the next road section;
2) for each function currently being executed, if the function is not the same as a function corresponding to any function enabling flag, the execution of the function will be stopped on the next road section.

Step 306: AGV traveling on the next road section according to the path information of the next road section and the currently used travel control parameter, and the process returns to step 304.

Step 307: AGV updating the currently used travel control parameter with the read travel control parameter, and traveling on the next road section according to the path information of the next road section and the updated currently used travel control parameter, and the process returns to step 304.

When the AGV determines that it has reached the end of the task according to its own positioning position information, it stops traveling.

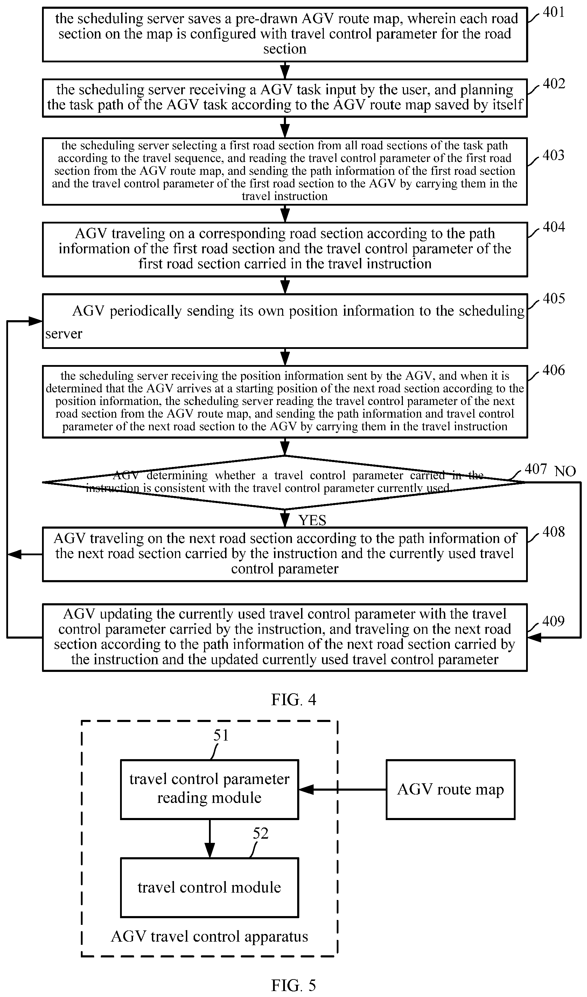

Fig. 4 is the flow chart of the AGV travel control method provided by another embodiment of the present application, and its specific steps are as follows:
Step 401: the scheduling server saves a pre-drawn AGV route map, wherein each road section on the map is configured with travel control parameter for the road section.

The AGV route map is a route map for the entire travel range of the AGV.

The travel control parameters include: one of the following or any combination thereof: a speed, an acceleration, a positioning accuracy configured with a positioning position and executing an action. The speed includes: one of the maximum speed and the minimum speed or a combination thereof; the acceleration includes: one of the maximum acceleration and the minimum acceleration or a combination of thereof.

When configuring the travel control parameters, it can be configured on a corresponding road section or on a starting node of the road section.

In addition, for each road section on the AGV route map, if the AGV needs to execute one or more functions when traveling on the road section, the road section is configured with enabling flag of the one or more functions.

The functions include: a voice playback function configured with the voice content to be played, or/and an obstacle avoidance detection function configured with an obstacle avoidance scheme (including obstacle avoidance detection distance), or/and a start actuator function configured with a start position.

Step 402: the scheduling server receiving a AGV task input by the user, and planning the task path of the AGV task according to the AGV route map saved by itself.

Step 403: the scheduling server selecting a first road section from all road sections of the task path according to the travel sequence, and reading the travel control parameter of the first road section from the AGV route map, and sending the path information of the first road section and the travel control parameter of the first road section to the AGV by carrying them in the travel instruction.

In addition, if the scheduling server reads one or more function enabling flags of the first road section from the AGV route map, it will carry the function enabling flags in the travel instruction and send it to the AGV.

Step 404: AGV traveling on a corresponding road section according to the path information of the first road section and the travel control parameter of the first road section carried in the travel instruction.

In addition, in the case that one or more function enabling flags are carried in the travel instruction, the AGV needs to execute the corresponding function.

Step 405: AGV periodically sending its own position information to the scheduling server.

Step 406: the scheduling server receiving the position information sent by the AGV, and when it is determined that the AGV arrives at a starting position of the next road section according to the position information, the scheduling server reading the travel control parameter of the next road section from the AGV route map, and sending the path information and travel control parameter of the next road section to the AGV by carrying them in the travel instruction.

In addition, if the scheduling server reads one or more function enabling flags of the next road section from the AGV route map, the function enabling flags are carried in the travel instruction and sent to the AGV.

Step 407: AGV receiving the travel instruction, and determining whether a travel control parameter carried in the instruction is consistent with the travel control parameter currently used.

In addition, in the case that one or more function enabling flags are carried in the travel instruction, the AGV also needs to compare the functions corresponding to the function enabling flags in the instruction with the functions currently being executed, specifically:
1) For each function corresponding to the function enabling flags in the instruction, if a function is the same as one function currently being executed, continue to execute the function on the next road section; otherwise, start to execute the function on the next road section;
2) For each function currently being executed, if the function is not the same as any function corresponding to the function enabling flag in the instruction, the execution of the function will be stopped on the next road section.

When the function is to start the actuator, when the AGV is traveling on the road section, it is determined in real time whether the AGV reaches the start position for starting the actuator, and if so, start the actuator.

Step 408 : AGV traveling on the next road section according to the path information of the next road section carried by the instruction and the currently used travel control parameter, and the process returns to step 405 .

Step 409: AGV updating the currently used travel control parameter with the travel control parameter carried by the instruction, and traveling on the next road section according to the path information of the next road section carried by the instruction and the updated currently used travel control parameter, and the process returns to step 405.

When the scheduling server determines that the AGV has reached the end of the task based on the position information sent by the AGV, it will send a stop instruction to the AGV.

Fig. 5 is a schematic structural diagram of an AGV travel control apparatus provided by an embodiment of the present application, the apparatus is located on a scheduling server or an AGV, and the apparatus mainly includes: a travel control parameter reading module 51 and a travel control module 52, wherein:
the travel control parameter reading module 51 is configured for, when the AGV is traveling on a task path, for each road section on the task path, reading a travel control parameter configured for the road section from an AGV route map, wherein the AGV route map is a route map within a travel range of the AGV, and each road section on the map is configured with a travel control parameter for the road section;
the travel control module 52 is configured for controlling the AGV to travel on a corresponding road section according to the travel control parameter read by the travel control parameter reading module 51.

In a possible embodiment, the travel control module 52 is further configured for: when the travel control parameter includes a speed, controlling the AGV to travel on a corresponding road section according to the travel control parameter, including:
when detecting that the AGV enters the corresponding road section, determining whether a speed corresponding to the road section is consistent with a current speed of the AGV, and if not, then controlling the AGV to adjust its speed from the current speed to the speed corresponding to the road section;
when the travel control parameter includes an acceleration, controlling the AGV to travel on the corresponding road section according to the travel control parameter, including:
   when detecting that the AGV enters the corresponding road section, determining whether an acceleration corresponding to the road section is consistent with a current acceleration of the AGV, if not, controlling the AGV to adjust its acceleration from the current acceleration to the acceleration corresponding to the road section;
   when the travel control parameter includes a positioning accuracy configured with a positioning position and executing an action, controlling the AGV to travel on the corresponding road section according to the travel control parameter includes:
      when detecting that the AGV enters the corresponding road section, detecting a distance
   between the AGV and the positioning position in real time, and when the distance is less than the positioning accuracy, controlling the AGV to execute a corresponding action.

In a possible embodiment, the travel control module 52 is further configured for querying, for each road section on the task path, from the AGV route map whether the road section is configured with enabling flags for one or more functions, and if so, controlling the AGV to execute a corresponding function when traveling on the road section.

In a possible embodiment, the functions configured for the road section queried by the travel control module 52 including: a voice playback function configured with the voice content to be played, or/and, an obstacle avoidance detection function configured with an obstacle avoidance detection distance, or/and, a start actuator function configured with a start position; and
when the functions include the voice playback function configured with the voice content to be played, controlling the AGV to execute the corresponding function by the travel control module 52 when traveling on the road section includes:
when detecting that the AGV enters the road section, controlling the AGV to start playing the configured voice content, and when detecting that the AGV leaves the road section, controlling the AGV to stop playing the voice content;
when the function includes the obstacle avoidance detection function configured with an obstacle avoidance detection distance, controlling the AGV to execute a corresponding function by the travel control module 52 when traveling on the road section includes:
   when detecting that the AGV enters the road section, controlling the AGV to start detecting obstacles within the configured obstacle avoidance detection distance, and when detecting that the AGV leaves the road section, controlling the AGV to stop detecting;
   when the function includes the start actuator function configured with a start position, controlling the AGV to execute a corresponding function by the travel control module 52 when traveling on the road section includes:
      when detecting that the AGV enters the road section, detecting in real time whether the AGV reaches the start position for starting the actuator, and if so, controlling the AGV to start the actuator.

In a possible embodiment, the above mentioned apparatus is located on the AGV,
for each road section on the task path, before the travel control parameter reading module 51 reads a travel control parameter configured for the road section from an AGV route map, further including:
receiving a task path sent by a scheduling server;
for each road section on the task path, the travel control parameter reading module 51 reading a travel control parameter configured for the road section from an AGV route map, including:
   periodically reading a travel control parameter configured for a road section where a current position of the AGV is located from the AGV route map according to the current position of the AGV;
   the travel control module 52 controls the AGV to travel on the corresponding road section according to the travel control parameter read by the travel control parameter reading module, including:
      comparing the read travel control parameter with a currently used travel control parameter, if they are inconsistent, updating the currently used travel control parameter with the read travel control parameter, then controlling the AGV to travel on the current road section according to the updated currently used travel control parameter.

In a possible embodiment, the above mentioned apparatus is located on a scheduling server,
for each road section on the task path, before the travel control parameter reading module 51 reading a travel control parameter configured for the road section from an AGV route map, further including:
receiving a AGV task and planning a task path of the AGV task according to a pre-drawn AGV route map, and sending the task path to the AGV;
for each road section on the task path, the travel control parameter reading module 51 reading a travel control parameter configured for the road section from an AGV route map, including:
   receiving a current position of the AGV periodically sent by the AGV, and reading a travel control parameter configured for a road section where the current position of the AGV is located from the AGV route map according to the current position of the AGV, and sending the travel control parameter to the AGV.

Embodiments of the present application further provide a non-transitory computer-readable storage medium, the non-transitory computer-readable storage medium stores instructions, and when executed by the processor, the instructions cause the processor to perform the AGV travel control method as described in any one of the steps 101-103, or the steps 201-209, or the steps 301-307, or the steps of 401-409.

Embodiments of the present application further provide an electronic device, including the above mentioned non-transitory computer-readable storage medium, and the above mentioned processor that can access the non-transitory computer-readable storage medium.

Embodiments of the present application also provide a computer program product including instructions, which, when running on a computer, enables the computer to execute any of the above mentioned AGV travel control methods.

The beneficial technical effects of the embodiments of the present application are as follows.

The embodiments of the present application takes into account the actual road conditions of different road sections on the AGV task path, configures travel control parameters for different road sections, and reads the travel control parameters of the road section in real time during the AGV travel process, so that the AGV can adapt to complex environments , to improve the efficiency of the AGV to perform tasks.

In addition, the embodiments of the present application also take into account the different functional requirements of different road sections on the AGV task path, configure corresponding functions for the corresponding road sections, and read the function of the road section configuration in real time during the AGV travel process, which further improves the adaptability of the AGV.

In this application, the technical features in each optional solution can be combined to form solutions as long as they are not contradictory, and these solutions are all within the scope disclosed in this application. Relational terms such as first and second, etc. are only used to distinguish one entity or operation from another and do not necessarily require or imply any such actual relationship between these entities or operations or order. Moreover, the terms "including", "comprising" or any other variation thereof are intended to encompass non-exclusive inclusion such that a process, method, article or device comprising a list of elements includes not only those elements, but also includes not explicitly listed or other elements inherent to such a process, method, article or apparatus. Without further limitation, an element qualified by the phrase "including a..." does not preclude the presence of additional identical elements in a process, method, article or apparatus that includes the elements.

The above descriptions are only preferred embodiments of the present application, and are not intended to limit the present application. Any modifications, equivalent replacements, improvements, etc. made within the spirit and principles of the present application shall be included in the scope of protection of the present application.

## Claims

1. A method for controlling travel of an automated guided vehicle AGV, the method comprising:
when the AGV is traveling on a task path, for each road section on the task path, reading, via a scheduling device, a travel control parameter configured for the road section from an AGV route map, wherein the AGV route map is a route map within a travel range of the AGV, a road between two adjacent road section nodes on the map is called a road section, and each road section on the map is configured with a travel control parameter for the road section; the task path comprises at least one road section, which is a road section that the AGV needs to travel to perform a task;
controlling, via the scheduling device, the AGV to travel on a corresponding road section according to the read travel control parameter.

2. The method according to claim 1, wherein the travel control parameter comprises one of the following or any combination thereof: a speed, an acceleration, a positioning accuracy configured with a positioning position and executing an action;
when the travel control parameter comprises a speed, controlling the AGV to travel on a corresponding road section according to the travel control parameter comprises:
when detecting that the AGV enters the corresponding road section, determining, via the scheduling device, whether a speed corresponding to the road section is consistent with a current speed of the AGV, and if not, then controlling the AGV to adjust its speed from the current speed to the speed corresponding to the road section;
when the travel control parameter comprises an acceleration, controlling the AGV to travel on the corresponding road section according to the travel control parameter comprises:
when detecting that the AGV enters the corresponding road section, determining, via the scheduling device, whether an acceleration corresponding to the road section is consistent with a current acceleration of the AGV, and if not, then controlling the AGV to adjust its acceleration from the current acceleration to the acceleration corresponding to the road section;
when the travel control parameter comprises a positioning accuracy configured with a positioning position and executing an action, controlling the AGV to travel on the corresponding road section according to the travel control parameter comprises:
when detecting that the AGV enters the corresponding road section, detecting, via the scheduling device, a distance between the AGV and the positioning position in real time, and when the distance is less than the positioning accuracy, controlling the AGV to execute a corresponding action.

3. The method according to claim 1, wherein after reading the travel control parameter configured for the road section from the AGV route map, the method further comprises:
for each road section on the task path, querying, via the scheduling device, from the AGV route map whether the road section is configured with enabling flags for one or more functions, and if so, controlling the AGV to execute a corresponding function when traveling on the road section.

4. The method according to claim 3, wherein the functions comprise: a voice playback function configured with voice content to be played, or/and, an obstacle avoidance detection function configured with an obstacle avoidance detection distance, or/and a start actuator function configured with a start position; and
when the functions comprise the voice playback function configured with voice content to be played, controlling the AGV to execute a corresponding function when traveling on the road section comprises:
when detecting that the AGV enters the road section, controlling, via the scheduling device, the AGV to start playing the configured voice content, and when detecting that the AGV leaves the road section, controlling the AGV to stop playing the voice content;
when the functions comprise the obstacle avoidance detection function configured with an obstacle avoidance detection distance, controlling the AGV to execute a corresponding function when traveling on the road section comprises:
when detecting that the AGV enters the road section, controlling, via the scheduling device, the AGV to start detecting obstacles within the configured obstacle avoidance detection distance, and when detecting that the AGV leaves the road section, controlling the AGV to stop detecting;
when the functions comprise the start actuator function configured with a start position, controlling the AGV to execute a corresponding function when traveling on the road section comprises:
when detecting that the AGV enters the road section, detecting in real time, via the scheduling device, whether the AGV reaches the start position for starting the actuator, and if so, controlling the AGV to start the actuator.

5. The method according to claim 1, wherein the scheduling device is located on the AGV,
when the AGV is traveling on a task path, for each road section on the task path, before reading, via a scheduling device, a travel control parameter configured for the road section from an AGV route map, the method further comprises:
receiving, via the scheduling device, a task path sent by a scheduling server;
wherein reading, via a scheduling device, a travel control parameter configured for the road section from an AGV route map for each road section on the task path, comprises:
periodically reading, via the scheduling device, a travel control parameter configured for a road section where a current position of the AGV is located from the AGV route map according to the current position of the AGV;
wherein controlling, via the scheduling device, on the basis of the read travel control parameter, the AGV to travel on a corresponding road section according to the travel control parameter, comprises:
comparing, via the scheduling device, the read travel control parameter with a currently used travel control parameter, if they are inconsistent, updating the currently used travel control parameter with the read travel control parameter, then controlling the AGV to travel on the current road section according to the updated currently used travel control parameter.

6. The method according to claim 1, wherein the scheduling device is located on the scheduling server,
when the AGV is traveling on a task path, for each road section on the task path, before reading, via a scheduling device, a travel control parameter configured for the road section from an AGV route map, the method further comprises:
receiving, via the scheduling device, a AGV task and planning a task path of the AGV task according to a pre-drawn AGV route map, and sending the task path to the AGV;
wherein reading, via a scheduling device, a travel control parameter configured for the road section from an AGV route map for each road section on the task path, comprises:
receiving, via the scheduling device, a current position of the AGV periodically sent by the AGV, and reading a travel control parameter configured for a road section where the current position of the AGV is located from the AGV route map according to the current position of the AGV, and sending the travel control parameter to the AGV.

7. An apparatus for controlling travel of an automated guided vehicle AGV, the apparatus comprises:
a travel control parameter reading module, configured for, when the AGV is traveling on a task path, for each road section on the task path, reading a travel control parameter configured for the road section from an AGV route map, wherein the AGV route map is a route map within a travel range of the AGV, a road between two adjacent road section nodes on the map is called a road section, and each road section on the map is configured with a travel control parameter for the road section; the task path comprises at least one road section, which is a road section that the AGV needs to travel to perform a task;
a travel control module, configured for controlling the AGV to travel on a corresponding road section according to the travel control parameter read by the travel control parameter reading module.

8. The apparatus of claim 7, wherein the travel control module is further configured for:
when the travel control parameter comprises a speed, controlling the AGV to travel on a corresponding road section according to the travel control parameter, comprises:
when detecting that the AGV enters the corresponding road section, determining whether a speed corresponding to the road section is consistent with a current speed of the AGV, and if not, then controlling the AGV to adjust its speed from the current speed to the speed corresponding to the road section;
when the travel control parameter comprises an acceleration, controlling the AGV to travel on the corresponding road section according to the travel control parameter, comprises:
when detecting that the AGV enters the corresponding road section, determining whether an acceleration corresponding to the road section is consistent with a current acceleration of the AGV, if not, then controlling the AGV to adjust its acceleration from the current acceleration to the acceleration corresponding to the road section;
when the travel control parameter comprises a positioning accuracy configured with a positioning position and executing an action, controlling the AGV to travel on the corresponding road section according to the travel control parameter comprises:
when detecting that the AGV enters the corresponding road section, detecting a distance between the AGV and the positioning position in real time, and when the distance is less than the positioning accuracy, controlling the AGV to execute a corresponding action.

9. The apparatus according to claim 7, wherein the travel control module is further configured for querying, for each road section on the task path, from the AGV route map whether the road section is configured with enabling flags for one or more functions, and if so, controlling the AGV to execute a corresponding function when traveling on the road section.

10. The apparatus according to claim 9, wherein the functions configured for the road section queried by the travel control module comprise: a voice playback function configured with voice content to be played, or/and, an obstacle avoidance detection function configured with an obstacle avoidance detection distance, or/and, a start actuator function configured with a start position; and
when the functions comprise the voice playback function configured with voice content to be played, controlling the AGV to execute a corresponding function by the travel control module when traveling on the road section comprises:
when detecting that the AGV enters the road section, controlling the AGV to start playing the configured voice content, and when detecting that the AGV leaves the road section, controlling the AGV to stop playing the voice content;
when the functions comprise the obstacle avoidance detection function configured with an obstacle avoidance detection distance, controlling the AGV to execute a corresponding function by the travel control module when traveling on the road section comprises:
when detecting that the AGV enters the road section, controlling the AGV to start detecting obstacles within the configured obstacle avoidance detection distance, and when detecting that the AGV leaves the road section, controlling the AGV to stop detecting;
when the functions comprise the start actuator function configured with a start position, controlling the AGV to execute a corresponding function by the travel control module when traveling on the road section comprises:
when detecting that the AGV enters the road section, detecting in real time whether the AGV reaches the start position for starting the actuator, and if so, controlling the AGV to start the actuator.

11. The apparatus of claim 7, wherein the apparatus is located on the AGV,
for each road section on the task path, before the travel control parameter reading module reading a travel control parameter configured for the road section from an AGV route map, further comprises:
receiving a task path sent by a scheduling server;
for each road section on the task path, the travel control parameter reading module reading a travel control parameter configured for the road section from an AGV route map, comprises:
periodically reading a travel control parameter configured for a road section where a current position of the AGV is located from the AGV route map according to the current position of the AGV;
the travel control module controlling the AGV to travel on the corresponding road section according to the travel control parameter read by the travel control parameter reading module, comprises:
comparing the read travel control parameter with a currently used travel control parameter, if they are inconsistent, updating the currently used travel control parameter with the read travel control parameter, then controlling the AGV to travel on the current road section according to the updated currently used travel control parameter.

12. The apparatus of claim 7, wherein the device is located on a scheduling server,
for each road section on the task path, before the travel control parameter reading module reading a travel control parameter configured for the road section from an AGV route map, further comprises:
receiving a AGV task and planning a task path of the AGV task according to a pre-drawn AGV route map, and sending the task path to the AGV;
for each road section on the task path, the travel control parameter reading module reading a travel control parameter configured for the road section from an AGV route map, comprises:
receiving a current position of the AGV periodically sent by the AGV, and reading a travel control parameter configured for a road section where the current position of the AGV is located from the AGV route map according to the current position of the AGV, and sending the travel control parameter to the AGV.

13. An electronic device, comprising a processor and a memory;
the memory is configured for storing a computer program;
the processor is configured to implement the method of any one of claims 1-6 when executing the program stored in the memory.

14. A computer-readable storage medium, wherein a computer program is stored in the computer-readable storage medium, and when the computer program is executed by a processor, the method steps of any one of claims 1-6 are implemented.
